# Europäisches Patentamt
## European Patent Office
## Office européen des brevets

(11) Publication number: **0 069 709**
**B1**

(12) **EUROPEAN PATENT SPECIFICATION**

(45) Date of publication of patent specification: **27.02.85**

(21) Application number: **82830164.8**

(22) Date of filing: **09.06.82**

(51) Int. Cl.⁴: **B 60 R 16/00, B 60 J 5/04, F 16 L 11/11, H 01 R 35/00**

(54) **Wire-sheath in motor vehicle doors.**

(30) Priority: **18.06.81 ITU 5336881**

(43) Date of publication of application:
**12.01.83 Bulletin 83/02**

(45) Publication of the grant of the patent:
**27.02.85 Bulletin 85/09**

(84) Designated Contracting States:
**DE FR GB IT SE**

(56) References cited:
**WO-A-80/01196**
**FR-A-2 391 410**
**GB-A- 990 210**
**US-A-2 425 823**
**US-A-2 550 021**
**US-A-2 758 612**
**US-A-3 053 564**
**US-A-4 082 327**

(73) Proprietor: **FIAT AUTO S.p.A.**
**Corso Giovanni Agnelli 200**
**I-10135 Torino (IT)**

(72) Inventor: **Sandrone, Giuseppe**
**Piazza Cattaneo 18**
**I-10137 Torino (IT)**

Courier Press, Leamington Spa, England.

## Description

This invention relates to a sheath for protection of the wires passing from the motor vehicle body to the doors and controlling the various accessories placed in the doors.

This type of sheath is traditionally made of elastomeric material and has a wide section in order to house the various electrical wires which are great in number especially in luxury motor vehicles e.g. for actuating the window operating mechanism, the rearview mirror or the loudspeaker.

Said sheaths generally present a wide tubular section and are generally made of rubber of considerable thickness and of smooth surface and therefore they present some inconveniences, e.g. a sheath deformation when opening or closing the doors and consequently a dangerous wearing causing the kinking of the wires housed inside the sheath.

Furthermore, for the stability of the assembled part, a plate and a counterplate, both with a hole, are provided in the flanged joined to the motor vehicle body to allow the retention of a flange on the sheath. Furthermore the number and the overall dimensions of the components involve high costs and long assembly and working times.

The primary object of the invention is to avoid said inconveniences, providing a sheath as above mentioned which guarantees a good operative flexibility and a quick and stable assembly into the motor vehicle body without screws or similar securing means.

Further object of this invention is to provide a product of easy manufacture, of reduced weight and size at competitive costs.

These objects are achieved at least in part according to the present invention, which provides a tubular flexible wire-sheath assembled in a motor vehicle door, being fixed at one end to the motor vehicle body and being slidable in a hole in a plate fixed on the door; such an arrangement is known from US—A—2,550,021; the invention is however characterized in that the sheath is corrugated all along its free length on only three quarters of its external surface.

The foregoing and further preferred features and advantages of the present invention will be apparent from the following more particular description, reference being made to the accompanying drawings, wherein:

Fig. 1 is a schematic partial front section of the door and of the corresponding part of the motor vehicle body housing the sheath object of an embodiment of this invention;

Fig. 2 is a frontal view of the sheath; and

Fig. 3 is a sectional view taken along in the line III—III of Fig. 2.

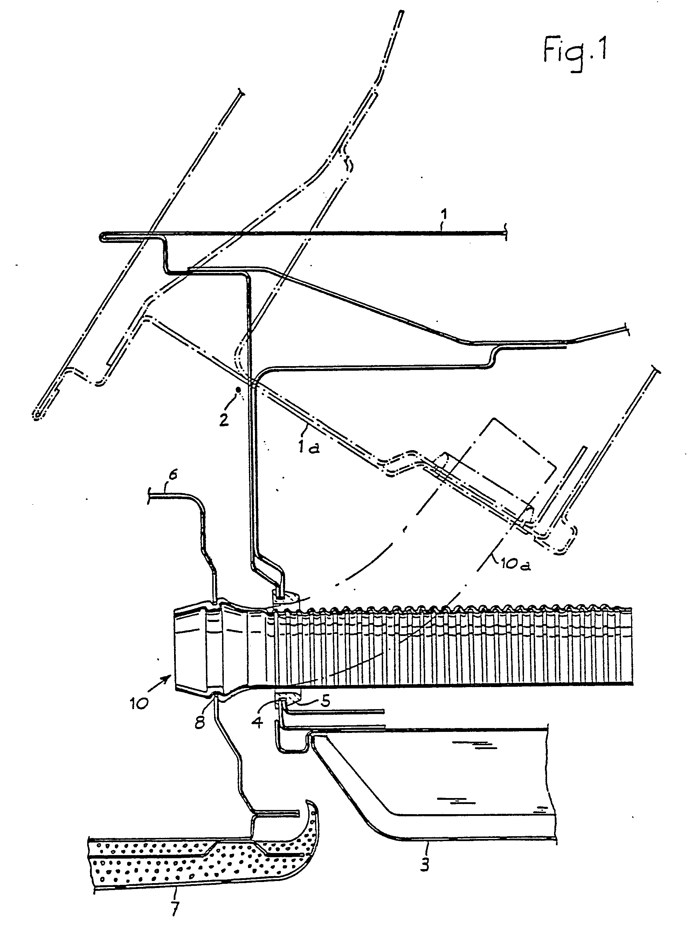

Referring to Figs. 1 to 3 the numeral 1 schematically designates a motor vehicle door rotating about the axis 2 and provided with an inner wall 3 and with a hole 4 for housing the plate 5.

Numeral 6 designates a part of the motor vehicle body corresponding to door 1 having an inner wall 7 and a hole 8 axially corresponding to the above mentioned hole 4 of the door 1, when the door is closed.

Into the hole 8 of the motor vehicle body is snapped the sheath in synthetic material, e.g. polyethylene, and shown with numeral 10.

This sheath snapping is possible both for the material flexibility and for the circular groove 11 obtained around its hollow head 12.

This hollow head 12 is integrally connected to the tubular member 13 passing through the hole 4 of the door 1. Said tubular member 13 has a reduced thickness and an external surface 14 presenting a nearly circular section.

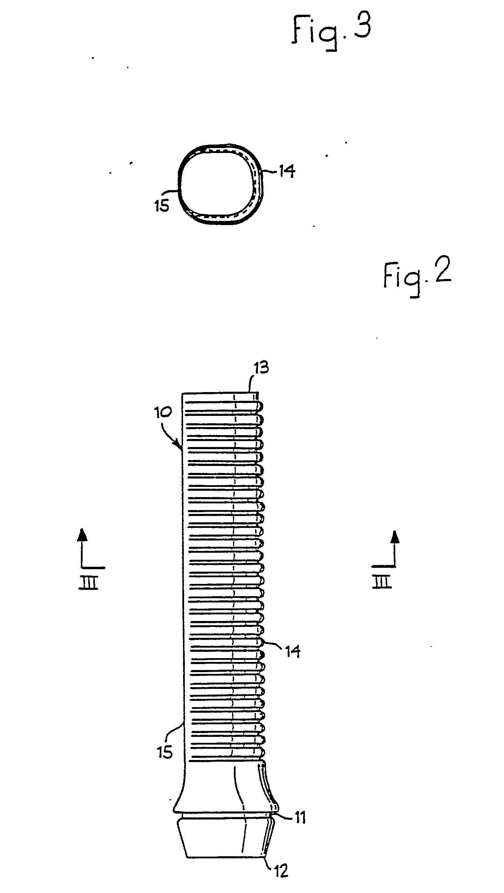

The tubular member is corrugated for three quarters of its circumference while the remaining quarter is smooth and contains the neutral axis of curvature of the sheath (Fig. 3).

It is evident from the above description that the electric control wires (not illustrated) passing through the sheath 10 are not kinked when opening the door 1, as shown in the open position 1a (dotted line).

The above mentioned advantages are due to the corrugation 14 which allows a good flexibility also in the curved position 10a avoiding bending, sharp kinking, etc.

To these advantages it is also to add the presence of a smooth part 15 on which runs the neutral axis when the door is completely opened. This facilitates the sliding of the sheath and avoids any noise when opening or closing the motor vehicle door.

Another advantage of the sheath object of the present invention is that, being made of synthetic material, it can be manufactured by a blowing process, at reduced costs compared to the injection moulding. Naturally the foregoing description has been given in detail for ease of understanding the inventive teaching and principles involved, which latter may be incorporated in other physical embodiments without departing from the scope of the appended claims.

## Claims

1. Tubular flexible wire-sheath assembled in a motor vehicle door, being fixed at one end (10) to the motor vehicle body (7) and being slidable in a hole (5) in a plate fixed on the door (1), characterized in that the sheath is corrugated all along its free length on only three quarters (14) of its external surface.

2. Tubular flexible sheath as per claim 1, characterized in that the remaining quarter (15) of its external side-surface is completely smooth.

3. Tubular flexible sheath as per claim 2, characterized in that the neutral axis of curvature runs on the smooth side-surface (15).

4. Tubular flexible sheath as per any one of claims 1 to 3, characterized in that the part attached to the motor vehicle body presents a hollow head (12) comprising a circular groove (11) enabling the sheath to be snapped into a hole (8) of the motor vehicle body.

5. Tubular flexible sheath as per any one of claims 1 to 4, characterized in that it is obtained by a blowing process.

## Revendications

1. Gaine pour câbles tubulaire souple monté dans les portes d'un véhicule à moteur, du type fixé par une première extrémité (10) à la carrosserie (7) du véhicule à moteur et pouvant coulisser à l'intérieur d'une plaque munie d'un trou (5) fixée sur la porte (1), caractérisée en ce que la gaine est ondulée dans toute sa longueur sur les trois quarts (14) de sa surface latérale externe.

2. Gaine tubulaire souple selon la revendication 1, caractérisée en ce que le quart restant (15) de sa surface latérale externe est complètement lisse.

3. Gaine tubulaire souple selon la revendication 1 ou 2, caractérisée en ce que l'axe de courbure neutre est disposé suivant la surface latérale lisse (15).

4. Gaine tubulaire souple selon la revendication 1, 2 ou 3, caractérisée en ce que la partie reliée à la carrosserie du véhicule à moteur présente une tête creuse (12) comprenant une rainure circulaire (11) permettant d'introduire par enclenchement brusque la gaine dans un trou de la carrosserie du véhicule à moteur.

5. Gaine tubulaire souple selon l'une quelconque des revendications 1 à 4, caractérisée en ce qu'elle est obtenue par un processus de soufflage.

## Patentansprüche

1. Schlauchförmige, flexible, in einer Kraftfahrzeugtür verlegte Kabelhülle, die mit einem Ende (10) an der Kraftfahrzeug-Karosserie (7) befestigt und die in einer Öffnung (5) in einer an der Tür (1) befestigten Platte beweglich ist, dadurch gekennzeichnet, daß die Hülle über ihre ganze freie Länge auf nur drei Viertel (14) ihres Außenumfangs gewellt ist.

2. Schlauchförmige, flexible Hülle nach Anspruch 1, dadurch gekennzeichnet, daß das verbleibende Viertel (15) der Außenseite vollständig glatt ist.

3. Schlauchförmige, flexible Hülle nach Anspruch 2, dadurch gekennzeichnet, daß die neutrale Krümmungsachse auf der glatten Außenseite (15) verläuft.

4. Schlauchförmige, flexible Hülle nach einem der Ansprüche 1 bis 3, dadurch gekennzeichnet, daß der an der Karosserie befestigte Teil einen hohlen Kopf (12) aufweist, der eine Umfangsnut (11) für die Schnappbefestigung der Hülle in einer Bohrung (8) der Karosserie hat.

5. Schlauchförmige, flexible Hülle nach einem der vorhergehenden Ansprüche, dadurch gekennzeichnet, daß diese durch Blasformung hergestellt ist.

Fig.1

Fig. 3

Fig. 2